# EUROPÄISCHE PATENTSCHRIFT

(11) **EP 3 222 996 B1**
(45) Veröffentlichungstag und Bekanntmachung des Hinweises auf die Patenterteilung: **05.08.2020**
(21) Anmeldenummer: 16161317.9
(22) Anmeldetag: 21.03.2016
(51) Int. Cl.: G01N 21/27, G01N 21/47, G01N 15/06, A61J 1/10, B01L 3/00, G01N 1/28

(54) **KALIBRIERSUSPENSIONSEINHEIT, VERFAHREN ZUR HERSTELLUNG EINER KALIBRIERSUSPENSIONSEINHEIT UND VERWENDUNG EINER KALIBRIERSUSPENSIONSEINHEIT**
CALIBRATION SUSPENSION UNIT, METHOD FOR PRODUCING A CALIBRATION SUSPENSION UNIT AND USE OF A CALIBRATION SUSPENSION UNIT
ENSEMBLE DE SUSPENSION D'ETALONNAGE, PROCEDE DE FABRICATION D'UN ENSEMBLE DE SUSPENSION D'ETALONNAGE ET UTILISATION D'UN ENSEMBLE DE SUSPENSION D'ETALONNAGE

(43) Veröffentlichungstag der Anmeldung: 27.09.2017
(73) Patentinhaber: Tintometer GmbH, 44287 Dortmund (DE)
(72) Erfinder: Grabert, Elmar, 44625 Herne (DE); Lundgreen, Ulrich, 33330 Gütersloh (DE); Palumbo, Perry, Fort Collins, Colorada 80528 (US); Huhta, Jeffe, Loveland, Colorado, 80538 (US)
(74) Vertreter: Prinz & Partner mbB

(56) Entgegenhaltungen:
- EP-A1- 2 077 452
- EP-A2- 0 380 949
- EP-A2- 0 724 152
- WO-A1-2006/034729
- WO-A2-00/05139
- US-A- 4 116 336
- US-A- 5 777 011
- US-A1- 2015 079 685
- US-B1- 6 405 872
- CANTY G A ET AL: "Injection of Fluidized Bed Combustion Ash into Mine Workings for Treatment of Acid Mine Drainage", MINE WATER AND THE ENVIRONMENT ; JOURNAL OF THE INTERNATIONAL MINE WATER ASSOCIATION (IMWA), SPRINGER, BERLIN, DE, vol. 25, no. 1, 2006, pages 45-55, XP019356905, ISSN: 1616-1068, DOI: 10.1007/S10230-006-0107-5
- Mike Sadar: "TURBIDITY STANDARDS", , 1 May 2003 (2003-05-01), pages 1-18, XP055443114, Retrieved from the Internet: URL:https://www.hach.com/asset-get.downloa d.jsa?id=7639984480 [retrieved on 2018-01-22]
- Anonymous: "LaMotte TC-3000 Tri-Meters", , 2005, XP055329176, USA Retrieved from the Internet: URL:http://www.globalw.com/downloads/WQ/TC 3000.pdf [retrieved on 2016-12-14]
- "Multi-Parameter TROLL 9000 WQP-100 Operator's Manual", , 2005, pages 1-164, XP055150803, Retrieved from the Internet: URL:http://www.in-situ.com/force_download. php?file_id=354 [retrieved on 2014-11-04]

## Beschreibung

Die Erfindung betrifft eine Kalibriersuspensionseinheit mit einer Kalibriersuspension zur Kalibrierung eines Trübungsmessgerätes, vorzugsweise eines On-line Trübungsmessgerätes, ein Verfahren zur Herstellung einer Kalibriersuspensionseinheit sowie die Verwendung einer Kalibriersuspensionseinheit.

Trübungsmessgeräte müssen regelmäßig kalibriert werden. Häufig werden dazu Kalibriersuspensionen verwendet, die einen Trübungsstandard in vorbestimmter Konzentration enthalten. Die Kalibriersuspensionen werden vom Anwender selbst hergestellt oder kommerziell als fertige Standardsuspension in Kanistern mit verschiedenen Volumina bezogen. Zur Kalibrierung wird die Standardsuspension wahlweise verdünnt und in das Trübungsmessgerät eingebracht. Anschließend wird die Lichtintensität gemessen und mit der Konzentration des Trübungsstandards in der Standardsuspension korreliert.

Die Kalibriersuspensionen bestehen in der Regel aus kolloidalen Partikeln in einer geeigneten Flüssigkeit. Der international anerkannte Trübungsstandard ist Formazin. Die Herstellung dieses Standards ist in der Norm ISO 7027 beschrieben.

Die kolloidalen Partikel setzen sich über die Zeit im Aufbewahrungsbehälter am Boden ab. Zur Kalibrierung eines Trübungsmessgerätes müssen die Kalibriersuspensionen deshalb vor Gebrauch gemischt werden. Dies geschieht durch Schütteln oder Rühren der Kalibriersuspension im Aufbewahrungsbehälter.

Aus der WO 00/05139 A2 ist ein beutelförmiger Behälter zur Aufbewahrung einer Suspension bekannt, der die Suspension vor Verunreinigungen durch Luft oder von sich aus dem Behälter lösenden Stoffen schützt.

In der US 4,116,336 B1 ist ein flexibler, gasdichter Behälter gezeigt, der zur Aufbewahrung einer Kalibriersuspension zur Kalibrierung von Blutgasmessgeräten vorgesehen ist.

Aus der US 6,405,872 B1 ist ein Behälter zur Aufbewahrung einer tonometrierten Flüssigkeit mit zumindest einer gelösten Gaskomponente bekannt.

In der EP 0 724 152 A2 ist ein Behälter zur Aufnahme von Kalibrierflüssigkeiten für eine Vorrichtung zum Bestimmen von Flüssigkeitsparametern gezeigt.

Aus der US 2015/0079685 A1 ist eine Vorrichtung zur Beschleunigung der Äquilibrierung einer Flüssigkeit bekannt, deren Flüssigkeitsoberfläche mit einer Gasphase in Kontakt steht. Die Vorrichtung umfasst eine in einen Analysator austauschbar einsetzbare Kassette, die zumindest einen flexiblen, gasdichten Beutel aufnimmt, in welchem die Flüssigkeit und die Gasphase aufgenommen sind.

In der EP 2 077 452 A1 ist eine Reagenzienkassette gezeigt, welche austauschbar in einen Analysator einsetzbar ist und mehrere Reagenzienbeutel aufweist. Die Reagenzienbeutel sind mit Anschlussleitungen ausgestattet, die wahlweise einer Eingabeeinrichtung des Analysators zuschaltbar sind. Jeder Reagenzienbeutel weist direkt bei der Einmündung der jeweiligen Anschlussleitung ein vom Analysator ansteuerbares Mehrwegeventil mit zumindest zwei Ventilstellungen auf, wobei die erste Ventilstellung eine Fluidverbindung zwischen der Anschlussleitung und dem Reagenzienbeutel herstellt und die zweite Ventilstellung den Reagenzienbeutel verschließt und eine Fluidverbindung zwischen einer Belüftungsquelle, vorzugsweise der Umgebungsluft, und der Anschlussleitung herstellt.

In der EP 0 380 949 A2 ist ein Referenzgefäss zur visuellen Beurteilung der Trübung von zu reinigenden ölhaltigen Flüssigkeiten beschrieben.

Der Erfindung liegt die Aufgabe zugrunde, eine Kalibriersuspensionseinheit sowie ein Verfahren zu deren Herstellung bereitzustellen, mit der die Handhabbarkeit von Trübungsmessungen vereinfacht und die Qualität der Messergebnisse verbessert werden kann.

Die Erfinder haben erkannt, dass für die Qualität der Kalibrierung eines Trübungsmessgerätes mit einer Kalibriersuspension zwei Faktoren entscheidend sind:
i) die homogene Mischung der in das Messgerät eingebrachten Kalibriersuspension und
ii) die Messung der Kalibriersuspension ohne zusätzlich störende Einflüsse.

Als wesentlicher Störeinfluss während der Messung der Kalibriersuspension wurden Luftblasen jeglicher Größe in der Kalibriersuspension identifiziert, wobei die kleinsten Luftblasen den stärksten und am längsten andauernden Störeinfluss darstellen. Luftblasen werden allerdings fast unweigerlich während des erforderlichen Mischens, beispielsweise durch Schütteln oder Rühren, in die Kalibriersuspension eingebracht. Eine längere Wartezeit, um vor allem die sehr kleinen Luftblasen entweichen zu lassen, kann allerdings wieder zu einem Absetzen der kolloidalen Partikel und damit zu einer ungenauen Kalibrierung führen.

Zusätzlich kann es auch beim Füllen der Messkammer des Trübungsmessgerätes mit der Kalibriersuspension zu einem weiteren Luftblaseneintrag kommen. Auch die auf diese Weise eingetragenen Luftblasen haben eine Störung der Messung zur Folge, wodurch erneut eine Wartezeit notwendig wird. Dabei besteht aber die Gefahr, dass sich die kolloidalen Partikel im Trübungsmessgerät absetzen und die Messung verfälscht wird.

Zur Lösung der oben genannten Aufgabe ist eine Kalibriersuspensionseinheit gemäss Anspruch 1 vorgesehen.

Im Sinne der Erfindung ist ein flexibles Material ein Material, dass sich leicht durch eine Person ohne zusätzliche Werkzeuge verformen lässt, insbesondere durch Kneten mit der Hand, und ohne dass der Behälter hierdurch beschädigt wird. Gegenüber einer in einem starren Behälter bereitgestellten Kalibriersuspension liegt der Vorteil der erfindungsgemäßen Kalibriersuspensionseinheit darin, dass die darin ohne Luftüberstand enthaltene, luftblasenfreie Kalibriersuspension schon durch ein Verformen des Behälters aus dem flexiblen Material gemischt werden kann. Hierbei kann, anders als beispielsweise beim Schütteln oder Rühren der Suspension in einem starren Kanister oder offenen Gefäß, eine Luftblasenbildung verhindert werden, sodass eine einfachere und sichere Handhabbarkeit sowie eine höhere Qualität der Trübungsmessung erreicht werden.

Gemäß einer vorteilhaften Ausführungsform ist der Behälter als Folienbeutel, bevorzugt als Schlauchbeutel, ausgebildet. Solche Folienbeutel, wie sie beispielsweise in Form von Infusionsbeuteln in der Medizintechnik oder Getränkebeuteln in der Getränkeindustrie bekannt sind, können kostengünstig, in einer Vielzahl von Formen und Größen hergestellt werden.

Gemäß einer weiteren vorteilhaften Ausführungsform hat der Behälter eine Wandstärke von weniger als 1 mm, bevorzugt weniger als 0,8 mm, besonders bevorzugt von 0,1 mm bis 0,8 mm. Durch diese Ausgestaltung lässt sich der Behälter besonders leicht mechanisch verformen, insbesondere kneten.

Der Behälter ist vorzugsweise gasdicht sowie flüssigkeitsundurchlässig. Somit wird sichergestellt, dass die Kalibriersuspension nicht durch Stoffe von außen verunreinigt werden kann.

Der Behälter kann lichtundurchlässig sein, insbesondere undurchlässig für UV-Licht und/oder sichtbares Licht, um unerwünschte Reaktionen des Trübungsstandards durch Einwirkung von elektromagnetischer Strahlung zu verringern.

In einer bevorzugten Ausführungsform ist der Behälter aus einer Kunststofffolie und/oder einer Metallfolie gebildet. Diese Materialien haben die Vorteile, dass sie kostengünstig sind und sich aus ihnen einfach die Behälter mit den gewünschten Eigenschaften, wie Flexibilität, herstellen lassen. Der Behälter kann auch aus einer mehrschichtigen Verbundfolie gebildet sein, beispielsweise aus mehreren Kunststofffolien und wahlweise einer äußeren Metallfolie oder Metallbeschichtung, beispielsweise aus Aluminium, um die verschiedenen Eigenschaften mehrerer Folien zu kombinieren.

Beispiele für geeignete Kunststofffolien sind Folien aus Polyethylen, Polypropylen, Polyamid, Polyurethan, Polycarbonat und (Poly)ethylenvinylacetat sowie Copolymerisate und Verbundwerkstoffe davon.

In einer weiteren bevorzugten Ausführungsform ist das maximale Volumen des Behälters größer als das Volumen der Kalibriersuspension. Somit ist der Behälter nicht prall, d.h. bis zu seinem Maximalvolumen, mit der Kalibriersuspension gefüllt, sodass der Behälter sich gut verformen lässt und die Kalibriersuspension auf diese Weise homogen durchmischt werden kann. Zusätzlich stellt das größere Volumen des Behälters sicher, dass die Druckkräfte gering bleiben, die beim Kneten der Kalibriersuspensionseinheit im Inneren des Behälters auftreten, und somit eine Schädigung, insbesondere ein Platzen des Behälters, vermieden wird.

Das Verhältnis von Volumen der Kalibriersuspension zum maximalen Volumen des Behälters beträgt vorzugsweise zwischen 0,2 und 0,8, bevorzugt zwischen 0,4 und 0,6. Diese Füllverhältnisse bieten einen guten Kompromiss zwischen Materialaufwand und Verformbarkeit des Behälters.

Erfindungsgemäß ist die Kalibriersuspensionseinheit im Wesentlichen frei von Luft, d.h. die Kalibriersuspension in dem flexiblen Behälter weist keinen Luftüberstand auf bzw. im Inneren des Behälters ist kein Totvolumen vorhanden. Auf diese Weise ist der Behälter ausschließlich mit der luftblasenfreien Kalibriersuspension gefüllt. Somit ist gewährleistet, dass die Kalibriersuspension nicht in Kontakt mit Luft kommt und sich daher auch keine Luftblasen in der Kalibriersuspension bilden können, selbst dann nicht, wenn die Kalibriersuspension im Behälter homogen durchmischt wird.

Die Kalibriersuspension ist eine Suspension von Formazin, Styrol-Divinylbenzol, Latex oder Metalloxidgel in einer geeigneten Flüssigkeit, bevorzugt eine Formazinsuspension.

In einer vorteilhaften Ausführungsform umfasst die Kalibriersuspensionseinheit ein Schlauchleitungssystem, das für den luftfreien Transport der Kalibriersuspension in ein Trübungsmessgerät geeignet ist. Das Schlauchleitungssystem stellt dabei sicher, dass beim Leiten der Kalibriersuspension aus der Kalibriersuspensionseinheit in das Trübungsmessgerät keine Luftblasen in die Kalibriersuspension eingetragen werden und/oder sich in der Kalibriersuspension bilden.

Das Schlauchleitungssystem kann eine direkt an den flexiblen Behälter angeschlossene Schlauchleitung umfassen, so dass eine Strömungsverbindung zwischen dem flexiblen Behälter und wenigstens einem Teil der Schlauchleitung besteht. Beispielsweise kann eine fest mit dem flexiblen Behälter der Kalibriersuspensionseinheit verbundene oder lösbar an den flexiblen Behälter angeschlossene Schlauchleitung vorgesehen sein. Die feste Verbindung kann beispielsweise dadurch gebildet sein, dass die Schlauchleitung mit dem flexiblen Behälter verschweißt oder in einem Stück mit dem Behälter ist. Alternativ kann das Schlauchleitungssystem mit einem Deckel an dem flexiblen Behälter befestigt sein, wobei das Schlauchleitungssystem fest und flüssigkeitsdicht mit dem Deckel verbunden ist und gemeinsam mit dem Deckel auf eine Öffnung im flexiblen Behälter aufgesetzt, vorzugsweise aufgeschraubt, wird.

Die Kalibriersuspensionseinheit mit dem direkt an den flexiblen Behälter angeschlossenen Schlauchleitungssystem ist bevorzugt von einer Klemme dicht und ohne Luftüberstand verschlossen. Dazu kann die Klemme an der Schlauchleitung vorzugsweise nahe dem flexiblen Behälter angeordnet sein und die Schlauchleitung luftblasenfrei abklemmen, so dass die Kalibriersuspension nicht aus dem flexiblen Behälter und/oder der Schlauchleitung fließen kann. Zusätzlich kann ein Verschluss am freien, das heißt am dem flexiblen Behälter entgegengesetzten Ende der Schlauchleitung vorgesehen sein, um einen Eintrag von Schmutz in die Schlauchleitung zu verhindern. Dieser Verschluss kann beispielsweise ein Stopfen, eine Schweißnaht oder ein selbstschließendes Stoppventil sein.

In einer weiteren Ausführungsform kann die Kalibriersuspensionseinheit ein separat bereitgestelltes Schlauchleitungssystem umfassen. Solche separaten Schlauchleitungssysteme sind beispielsweise in Form von Infusionssystemen aus der Medizintechnik bekannt und weisen neben der Schlauchleitung zum Transport der Kalibriersuspension üblicherweise eine Einrichtung zum Anzapfen des flexiblen Behälters auf.

Das separate Schlauchleitungssystem umfasst vorzugsweise eine Schlauchleitung und eine mit der Schlauchleitung verbundene Kanüle. Mit der Kanüle lässt sich die Kalibriersuspension in dem flexiblen Behälter anzapfen und über die Schlauchleitung luftblasenfrei zu einem Trübungsmessgerät transportieren.

Der Innendurchmesser der Schlauchleitung des Schlauchleitungssystems und wahlweise der Kanüle beträgt bevorzugt höchstens 9 mm, vorzugsweise 3 bis 7 mm. Die bevorzugten Innendurchmesser der Schlauchleitung und wahlweise der Kanüle haben den Vorteil, dass die Kalibriersuspension die Schlauchleitung und/oder die Kanüle vollständig ausfüllt und beim Transport zum Trübungsmessgerät die eingeschlossene Luft in der Schlauchleitung und/oder der Kanüle vor sich her schiebt, ohne dass es zu einer Vermischung der Kalibriersuspension mit Luft kommt. Auf diese Weise wird die Bildung von Luftblasen in der Kalibriersuspension unterbunden.

Gemäß einer weiteren bevorzugten Ausführungsform weist der Behälter eine Öffnung auf, die durch einen Septumdeckel verschlossen ist, insbesondere einen Septumdeckel aus Kunststoff. Im Sinne der Erfindung ist ein Septumdeckel ein Deckel mit einem Abschnitt, der Selbstdichtungseigenschaften aufweist und dafür vorgesehen ist, von einer Kanüle durchstochen zu werden. Dieser Abschnitt weist insbesondere eine Membran oder ein Dichtelement auf, das als eine dichtende Aufnahme für eine eindringende Kanüle dient.

Der Deckel kann ferner an seiner Innenseite einen in die Öffnung des Behälters hineinragenden, an seinem freien Ende geschlossenen Fortsatz aufweisen. Dieser Fortsatz verdrängt beim Aufsetzen des Deckels auf einen randvoll gefüllten Behälter die Flüssigkeit sowie eventuell noch vorhandene Luft aus dem Verschlussbereich, sodass sichergestellt ist, dass beim Verschließen des Behälters keine Luft eingeschlossen wird.

Der Septumdeckel und die Öffnung im Behälter sind bevorzugt als Schraubverschluss gebildet. Alternativ kann die Öffnung auch als eine an den Behälter angeformte Hülse gebildet sein, auf die der Septumdeckel aufgeklemmt ist.

Das Trübungsmessgerät ist bevorzugt ein On-line Trübungsmessgerät. Bei der On-line Messung wird üblicherweise eine Probe aus dem zu überwachenden Prozess entnommen und in das Messgerät geführt.

Gegenstand der Erfindung ist ferner ein Verfahren zur Herstellung einer Kalibriersuspensionseinheit zur Kalibrierung eines Trübungsmessgerätes gemäss Anspruch 12.

Gemäß einer vorteilhaften Ausführungsform erfolgt das Entfernen der Luft durch mechanisches Komprimieren des Behälters. Das mechanische Komprimieren kann beispielsweise durch Zusammendrücken des flexiblen mit Kalibriersuspension gefüllten Behälters zwischen zwei Flächen oder durch zwei Rollen erfolgen, die den Behälter ausdrücken, und stellt eine kostengünstige Methode dar, die restliche, noch im Behälter vorhandene Luft aus dem Behälter zu entfernen.

Die oben beschriebene Kalibriersuspensionseinheit wird erfindungsgemäß zur Kalibrierung eines Trübungsmessgerätes, insbesondere eines On-line Trübungsmessgerätes verwendet.

Gemäß einer bevorzugten Ausführungsform wird die Kalibriersuspension im Wesentlichen luftblasenfrei in das Trübungsmessgerät eingebracht. Hierdurch wird eine schnelle Durchführung der Messung ermöglicht und eine besonders hohe Qualität der Messergebnisse sichergestellt.

Gemäß einer weiteren bevorzugten Ausführungsform erfolgt das homogene Durchmischen der Kalibriersuspension im verschlossenen Behälter durch mechanisches Verformen der Kalibriersuspensionseinheit. Hierbei kann das mechanische Verformen insbesondere durch manuelles Zusammendrücken oder Kneten der Kalibriersuspensionseinheit erfolgen. Dies hat den Vorteil, dass eine Luftblasenbildung in der Kalibriersuspension verhindert ist.

In einer vorteilhaften Ausführungsform wird die homogen durchmischte Kalibriersuspension mittels der Schlauchleitung in das Trübungsmessgerät eingebracht. Hierbei schiebt die Kalibriersuspension die in der Schlauchleitung eingeschlossene Luft vor sich her, ohne dass sich die Kalibriersuspension mit der Luft vermischt, und verdrängt anschließend die in der Messkammer des Trübungsmessgeräts vorhandene Luft. Hierdurch wird sichergestellt, dass die Kalibriersuspension frei von Luftblasen in das Trübungsmessgerät eingebracht wird.

Beim Entweichen der Kalibriersuspension zieht sich der flexible Behälter zusammen, ohne dass Luft als Volumenausgleich durch die Kalibriersuspension angesaugt wird. Auf diese Weise wird der luftblasenfreie Transport der Kalibriersuspension in das Trübungsmessgerät sichergestellt.

Weitere Vorteile und Merkmale ergeben sich aus der nachfolgenden Beschreibung von bevorzugten Ausführungsformen in Verbindung mit den beigefügten Zeichnungen. In diesen zeigen:
- Figur 1 in einer schematischen Ansicht eine erfindungsgemäße Kalibriersuspensionseinheit mit einem Schlauchleitungssystem, die an ein Trübungsmessgerät angeschlossen ist;
- Figuren 2a, 2b und 2c in einer schematischen Ansicht jeweils eine Ausführungsform des flexiblen Behälters einer erfindungsgemäßen Kalibriersuspensionseinheit;
- Figur 3 in einer Schnittansicht einen Septumdeckel einer erfindungsgemäßen Kalibriersuspensionseinheit;
- Figuren 4a und 4b in einer Schnittansicht jeweils eine Ausführungsform einer erfindungsgemäßen Kalibriersuspensionseinheit mit einem Schlauchleitungssystem;
- Figur 5 in einer Schnittansicht eine weitere Ausführungsform einer erfindungsgemäßen Kalibriersuspensionseinheit mit einem Schlauchleitungssystem;
- Figuren 6a und 6b in einer schematischen Ansicht jeweils den Anschluss eines Trübungsmessgerätes an das Schlauchleitungssystem einer erfindungsgemäßen Kalibriersuspensionseinheit;
- Figuren 7a und 7b in einer schematischen Ansicht ein erfindungsgemäßes Verfahren zum Füllen einer erfindungsgemäßen Kalibriersuspensionseinheit, und
- Figuren 8a und 8b in einer schematischen Ansicht ein weiteres erfindungsgemäßes Verfahren zum Füllen einer erfindungsgemäßen Kalibriersuspensionseinheit.

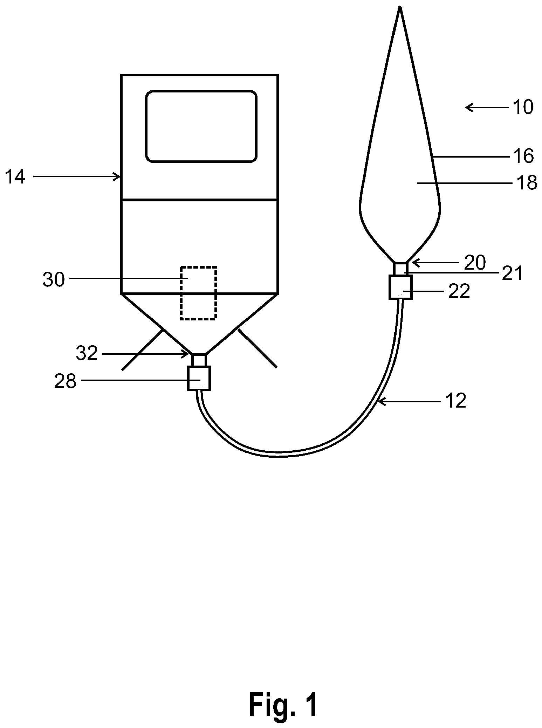

In Figur 1 ist eine erfindungsgemäße Kalibriersuspensionseinheit 10 gezeigt, die über ein Schlauchleitungssystem 12 mit einem Trübungsmessgerät 14 verbunden ist. Die Kalibriersuspensionseinheit 10 umfasst einen flexiblen Behälter 16, beispielsweise einen Folienbeutel, der mit einer Kalibriersuspension 18 zur Trübungsmessung gefüllt ist und der wenigstens eine Öffnung 20 aufweist, beispielsweise in Form einer an den Beutel angebrachten Kunststoffhülse 21, die durch einen Septumdeckel 22 verschlossen ist.

Der Behälter 16 besteht aus einem flexiblen Material, insbesondere einer Kunststofffolie, einer Metallfolie oder einer Verbundfolie, die aus mehreren Lagen von Kunststofffolien und/oder Metallfolien gebildet sein kann.

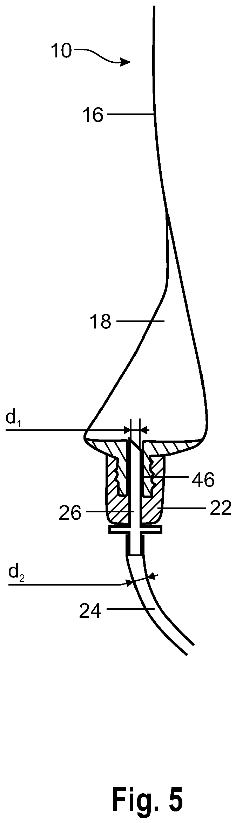

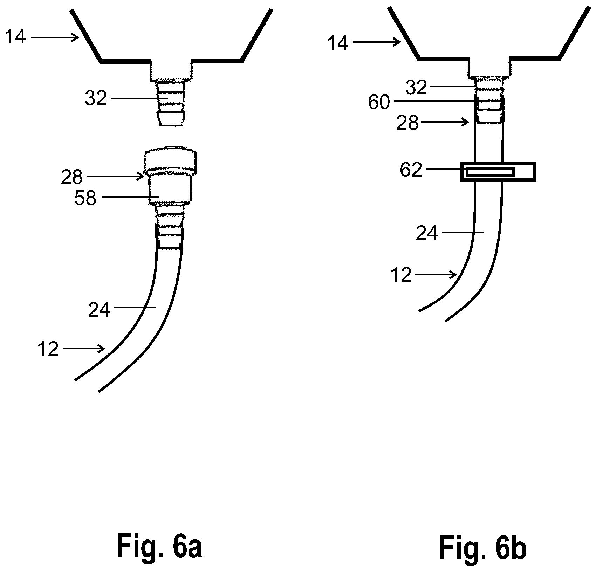

Das Schlauchleitungssystem 12 umfasst eine Schlauchleitung 24 mit einem ersten freien Ende, an dem eine Kanüle 26 (Figur 5) vorgesehen ist. Am entgegengesetzten freien Ende der Schlauchleitung 24 ist ein Anschluss 28 (Figuren 6a und 6b) vorgesehen, der zum Anschließen der Schlauchleitung 24 an das Trübungsmessgerät 14 geeignet ist.

Das Trübungsmessgerät 14 hat einen Messkörper 30, insbesondere einen Durchflussmesskörper, der zur Bestimmung der Trübungswerte von in den Messkörper eingebrachten Proben vorgesehen ist und der über ein Ablassventil 32 sowohl entleert als auch befüllt werden kann.

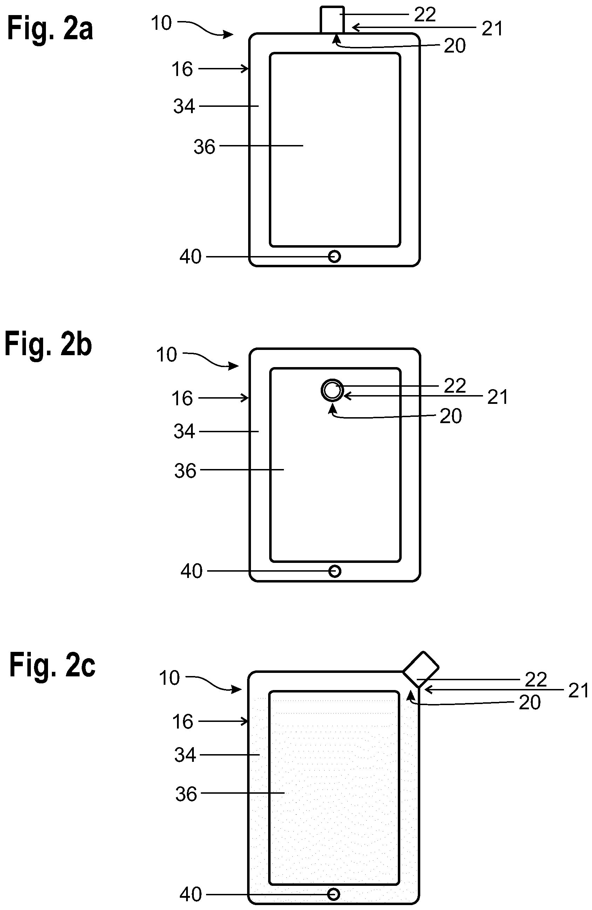

In den Figuren 2a, 2b und 2c sind verschiedene Ausführungsformen der Kalibriersuspensionseinheit 10 gezeigt, deren Behälter 16 jeweils als rechteckiger, kissenförmiger Folienbeutel ausgebildet ist. Der Behälter 16 ist aus zwei übereinander liegenden Kunststofffolien aufgebaut, die in einem umlaufenden Randbereich 34 miteinander dicht verbunden sind, beispielsweise durch Schweißen, Kleben oder Heißsiegeln, und einen Innenbereich 36 bilden, der für die Aufnahme der Kalibriersuspension 18 vorgesehen ist.

Alternativ kann der Behälter 16 aus einem Ballon, als Standbeutel oder Schlauchbeutel gebildet sein und entsprechend einen kleineren oder keinen Randbereich 34 aufweisen. Der Schlauchbeutel kann mit oder ohne Seitenrand aus einer Flachfolie oder einem Folienschlauch gebildet sein und eine Öffnung 20 in Form einer in den Beutel eingebrachten Kunststoffhülse 21 aufweisen. In Figur 2a ist die Kunststoffhülse 21 mittig in eine Kopfnaht des Behälters 16 eingebracht, in Figur 2b ist die Kunststoffhülse 21 am Innnenbereich 36 eingebracht und in Figur 2c ist die Kunststoffhülse 21 an einer Ecke des Behälters 16 in eine Kopfnaht eingebracht. Standbeutel weisen üblicherweise einen als W-Falte ausgeführten Bodenbereich auf.

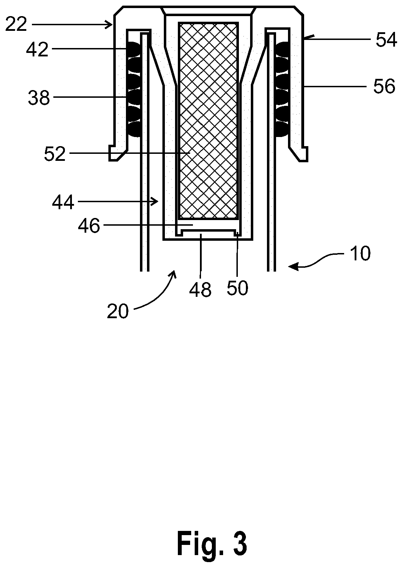

Die durch die Kunststoffhülse 21 gebildete Öffnung 20 kann am Behälter 16 einstückig angeformt oder mit diesem stoffschlüssig verbunden sein, insbesondere geklebt oder verschweißt sein. Die Öffnung 20 ist mit dem Septumdeckel 22 verschlossen. Bevorzugt weist die Öffnung 20 ein Gewinde 38, vorzugsweise ein Außengewinde (siehe Figur 3) auf, an dem der mit einem Innengewinde versehene Septumdeckel 22 als Schraubverschluss befestigt sein kann. Alternativ kann der Septumdeckel 22 auf die Öffnung 20 aufgeklemmt werden.

An seinem der Öffnung 20 entgegengesetzten Ende hat der Behälter 16 eine Öse 40, an der die Kalibriersuspensionseinheit 10 aufgehängt und/oder die zur Kennzeichnung der Kalibriersuspensionseinheit 10 verwendet werden kann.

Der Behälter 16 ist nicht vollständig mit der Kalibriersuspension 18 gefüllt. Das heißt, das maximale Volumen des Behälters 16 ist größer als das Volumen der in den Behälter 16 eingebrachten Kalibriersuspension 18. Das Verhältnis vom Volumen der Kalibriersuspension 18 zum maximalen Volumen des Behälters 16 kann zwischen 0,2 und 0,8, vorzugsweise zwischen 0,4 und 0,6 betragen.

Die Kalibriersuspensionseinheit 10 ist jedoch im Wesentlichen frei von Luft, d.h., der Behälter 16 ist ausschließlich mit der luftblasenfreien Kalibriersuspension 18 gefüllt und es gibt keinen Luftüberstand bzw. kein Totvolumen. Als Kalibriersuspension 18 dient bevorzugt eine Formazinsuspension.

Eine erfindungsgemäße Kalibriersuspensionseinheit 10 kann bis zu 1500 ml Kalibriersuspension 18 beinhalten. Vorzugsweise ist die Kalibriersuspensionseinheit 10 mit 100 ml bis 1200 ml Kalibriersuspension 18 gefüllt. Weiter bevorzugt beinhaltet die Kalibriersuspensionseinheit 10 ein größeres Volumen an Kalibriersuspension 18 als das zu füllende Volumen des Durchflussmessgerätes 30.

In Figur 3 ist ein Ausschnitt einer erfindungsgemäßen Kalibriersuspensionseinheit 10 mit einem aus Kunststoff gebildeten Septumdeckel 22 in einer Schnittansicht gezeigt. Der Septumdeckel 22 hat ein Innengewinde 42, das auf das Außengewinde 38 der Öffnung 20 aufgeschraubt ist, so dass der Septumdeckel 22 die Öffnung 20 des Behälters 16 dicht verschließt.

Der Septumdeckel 22 umfasst einen zylinderförmigen Fortsatz 44, der in die Öffnung 20 hineinragt und dafür vorgesehen ist, beim Aufsetzen des Septumdeckels 22 die in der Öffnung 20 vorhandene Kalibriersuspension 18 (nicht dargestellt) zu verdrängen. Der Fortsatz 44 ist vom Innenumfang der Öffnung 20 beabstandet, so dass die vom Fortsatz 44 verdrängte Kalibriersuspension aus der Öffung 20 überlaufen kann. Die überlaufende Kalibriersuspension 18 verdrängt wiederum die noch in der Öffnung eingeschlossene Luft, so dass eine verschlossene Kalibriersuspensionseinheit 10 ohne Lufteinschlüsse erhalten wird.

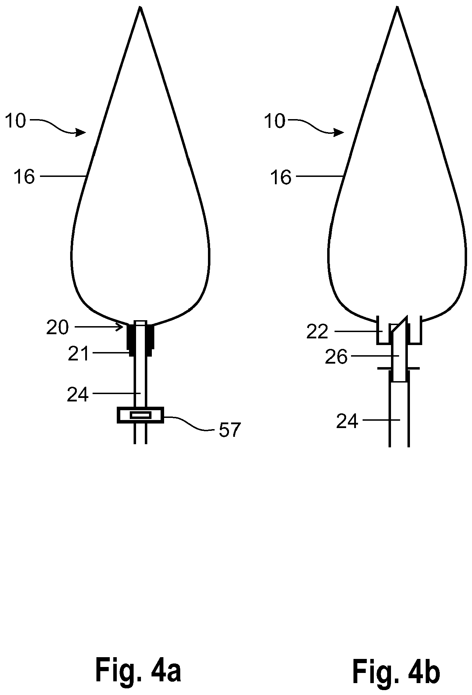

Der Fortsatz 44 weist einen axialen Kanal 46 auf, der an seinem dem Behälter 16 zugewandten axialen Ende mit einem Endabschnitt 48 verschlossen ist. Der Endabschnitt 48 hat auf der Innenseite des zylinderförmigen Fortsatzes 44 eine am Innenumfang des Kanals 46 umlaufende Nut 50, die als Sollbruchstelle dient, wenn eine Kanüle 26 (siehe Figur 4) zum Anzapfen der Kalibriersuspensionseinheit 10 in den Kanal 46 des Septumdeckels 22 eingeführt wird. Der Durchmesser des Kanals 46 ist vorzugsweise größer als der Außendurchmesser der Kanüle 26.

Im zylinderförmigen Fortsatz 44 ist ein in den Kanal 46 eingesetztes Dichtelement 52 angeordnet, das den Fortsatz 44 in radialer Richtung vollständig ausfüllt und abdichtet. Das Dichtelement 52 dient als dichtende Aufnahme für eine eindringende Kanüle 26, deren Außendurchmesser kleiner ist als der Durchmesser des Kanals 44.

Zusätzlich oder alternativ kann das nach außen zeigende Ende des Kanals 46 mit einer Schutzfolie oder einer Dichtmembran (nicht dargestellt) verschlossen sein.

Der Septumdeckel 22 weist an seiner äußeren Mantelfläche 54 eine in Axialrichtung geriffelte Oberfläche 56 auf, die zur besseren Bedienbarkeit des Septumdeckels 22 vorgesehen ist.

In Figur 4a ist eine alternative Ausführungsform der Kalibriersuspensionseinheit 10 mit einem direkt an den flexiblen Behälter 16 angeschlossenen Schlauchleitungssystem 12 gezeigt, wobei der Behälter 16 fest mit der Schlauchleitung 24 verbunden ist. Bei der hier gezeigten Ausführungsform ist die Schlauchleitung 24 an der Kunststoffhülse 21 angeschweißt, die in der Öffnung 20 im flexiblen Behälter 16 eingebracht ist.

In einer alternativen (nicht dargestellten) Ausführungsform kann an der Öffnung 20 ein Deckel vorgesehen sein, der direkt mit der Schlauchleitung 24 verbunden ist oder einen zum flexiblen Behälter 16 hin offenen Anschluss für die Schlauchleitung 24 aufweist.

In allen diesen Fällen ist der flexible Behälter 16 durch Abklemmen der Schlauchleitung 24 mittels einer Schlauchklemme 57 dicht verschlossen. Die Schlauchklemme 57 ist vorzugsweise an der Schlauchleitung 24 nahe der Öffnung 20 des flexiblen Behälters 16 angeordnet. Die Kalibriersuspension 18 im flexiblen Behälter 16 steht in der Schlauchleitung 24 über, so dass im flexiblen Behälter 16 kein Luftüberstand bzw. kein Totvolumen vorhanden ist.

In Figur 4b ist eine Kalibriersuspensionseinheit 10 mit einem Septumdeckel 22 gemäß Figur 3 gezeigt, die mittels einer an der Schlauchleitung 24 angebrachten Kanüle 26 angezapft wird. Die Schlauchleitung 24 mit Kanüle 26 wird bei dieser Ausführungsform als separates Schlauchleitungssystem 12 bereitgestellt.

Zur Verwendung der Kalibriersuspensionseinheit 10 zum Kalibrieren eines Trübungsmessgerätes 14 wird die Kalibriersuspension 18 homogen gemischt und im Wesentlichen luftblasenfrei in das Trübungsmessgerät 14 eingebracht.

Hierzu wird der flexible Behälter 16 der Kalibriersuspensionseinheit 10 kurz vor Gebrauch mechanisch verformt, beispielsweise indem der flexible Behälter 16 vom Anwender manuell geknetet und/oder geschüttelt wird. Um eine homogene Kalibriersuspension 18 zu erhalten, ist ein Kneten mit einer Dauer von ca. 10 sec bis 2 min, vorzugsweise von bis zu 1 min, besonders bevorzugt von 15 bis 30 sec ausreichend. Im Sinne der Erfindung wird unter "kurz vor Gebrauch" ein Zeitraum bis zu 10 min verstanden. Wird die Kalibriersuspensionseinheit 10 in diesem Zeitraum nicht verwendet, ist ein erneutes Durchmischen der Suspension durch Kneten oder Schütteln empfohlen.

Zur luftblasenfreien Füllung des Trübungsmessgerätes 14 wird die Kalibriersuspensionseinheit 10 wie in Figur 5 gezeigt angezapft. Hierzu wird die Kalibriersuspensionseinheit 10 mit der Öffnung 20 nach unten, d.h. Richtung Erdboden, aufgehängt. Der im Septumdeckel 22 angeordnete Kanal 46 wird dann mit der an der Schlauchleitung 24 angeordneten Kanüle 26 durchstochen. Dadurch wird die Schlauchleitung 24 mit der Kalibriersuspensionseinheit 10 und der im Behälter 16 enthaltenen Kalibriersuspension 18 verbunden. Die Schlauchleitung 24 ist während dieser Verbindung verschlossen, beispielsweise durch ein Stoppventil 58 (Fig. 6a) oder durch Abklemmen mit einer Klemme 62 (Fig, 6b), so dass keine Luft in die Kalibriersuspension 18 eintritt. Anschließend wird die Schlauchleitung 24 mit dem Trübungsmessgerät 14 verbunden und die Schlauchleitung 24 geöffnet. Alternativ kann die Schlauchleitung 24 zuerst an das Trübungsmessgerät 14 angeschlossen und danach der Septumdeckel 22 mit der Kanüle 26 durchstochen werden. In diesem Fall muss die Schlauchleitung 24 vor dem Anschluss an das Trübungsmessgerät 14 nicht verschlossen sein.

Bei Verwendung einer Kalibriersuspensionseinheit 10 mit einem direkt an den flexiblen Behälter 16 angeschlossenen Schlauchleitungssystem 12 (Fig. 4a) kann ein wahlweise am freien Ende der Schlauchleitung 24 angeordneter Verschluss geöffnet und die Schlauchleitung 24 mit dem Trübungsmessgerät 14 verbunden werden. Da die Schlauchleitung 24 noch durch die Klemme 57 verschlossen ist, kann keine Luft in die Kalibriersuspension gelangen. Nach dem Verbinden der Schlauchleitung 24 mit dem Trübungsmessgerät 14 wird die Kalibriersuspensionseinheit 10 mit der Öffnung 20 nach unten aufgehängt und die Klemme 57 entfernt. Dadurch kann die Kalibriersuspension 18 luftblasenfrei in das Trübungsmessgerät 14 fließen.

Der Innendurchmesser d₁ der Kanüle 26, sofern vorhanden, und der Innendurchmesser d₂ der Schlauchleitung 24 sind erfindungsgemäß so gewählt, dass die Kalibriersuspension 18 die Luft von der Kalibriersuspensionseinheit 10 zum Trübungsmessgerät 14 hin verdrängt, ohne dass Luftblasen durch die Schlauchleitung 24 in den Behälter 16 aufsteigen. Gleichzeitig sind die Innendurchmesser d₁, d₂ so bemessen, dass die Füllung des Messkörpers 30 im Trübungsmessgerät ausreichend schnell erfolgt.

Ein Innendurchmesser d₁, d₂ der Kanüle 26 und/oder der Schlauchleitung 24 von kleiner als 9 mm, insbesondere von 3 bis 7 mm sind hierzu besonders geeignet. Die Dauer der Füllung ist abhängig vom Volumen des Messkörpers 30. Bei einem Messkörper 30 mit einem Volumen von 300 ml dauert die Füllung zwischen 40 und 60 s.

In den Figuren 6a und 6b sind zwei verschiedene erfindungsgemäße Ausführungsformen gezeigt, wie das Schlauchleitungssystem 12 am Trübungsmessgerät 14 angeschlossen ist.

Das Ablassventil 32 des Trübungsmessgerätes 14 ist dafür vorgesehen, Proben aus dem Messkörper 30 zu Kalibrier- und Verifizierzwecken abzulassen. Erfindungsgemäß wird das Ablassventil 32 dazu genutzt, um die Kalibriersuspension 18 luftblasenfrei in den Messkörper 30 einzufüllen. Dazu wird die Kalibriersuspensionseinheit 10 über das Schlauchleitungssystem 12 mit dem Ablassventil 32 verbunden.

In der in Figur 6a gezeigten Ausführungsform weist das Schlauchleitungssystem 12 an seinem Anschluss 28 ein Stoppventil 58 auf, das an das Ablassventil 32 angeschlossen werden kann. Das Stoppventil 58 ist im nicht angeschlossenen Zustand geschlossen und öffnet selbständig beim Aufstecken auf das Ablassventil 32.

Alternativ kann, wie in Figur 6b gezeigt, der Anschluss 28 des Schlauchleitungssystems 12 als freies Leitungsende 60 der Schlauchleitung 24 ausgebildet sein. In diesem Fall wird ein unerwünschter Durchfluss der Kalibriersuspension 18 durch Abklemmen der Schlauchleitung 24, beispielsweise mit einer Klemme 62, verhindert. Zur Verbindung des Schlauchleitungssystems 12 mit dem Trübungsmessgerät 14 wird das freie Leitungsende 60 auf das Ablassventil 32 aufgeschoben und bei Bedarf mittels einer Schelle (nicht dargestellt) gesichert.

Nachdem die Kalibriersuspension 18 homogen gemischt, die Kalibriersuspensionseinheit 10 angezapft und, wie in Figur 1 gezeigt, mittels des Schlauchleitungssystems 12 mit dem Trübungsmessgerät 14 verbunden wurde, kann der Messkörper 30 gefüllt werden.

Zur Füllung des Messkörpers 30 wird die Kalibriersuspensionseinheit 10, mit der Öffnung 20 nach unten auf größerer geodätischer Höhe als der Messkörper 30 angeordnet, beispielsweise indem die Kalibriersuspensionseinheit 10 an der Öse 40 (siehe Fig. 2) aufgehängt wird. Falls die Schlauchleitung 24 durch eine Klemme 57 und/oder 62 blockiert ist, wird diese nun entfernt und so die Verbindung geöffnet. Durch den hydrostatischen Druck fließt die Kalibriersuspension 18 aus dem Behälter 16 in den Messkörper 30 und kann diesen komplett füllen. Der Behälter 16 zieht sich zusammen, ohne dass ein Unterdruck entsteht, welcher Luft ansaugen würde.

Da weder beim Durchmischen der Kalibriersuspension 18 im luftfreien Behälter 16 noch beim Füllen des Messkörpers 30 über das Schlauchleitungssystem 12, bei dem die Kalibriersuspension 18 die Luft als Ganzes verdrängt, Luftblasen in der Kalibriersuspension 18 eingeschlossen werden, ist auf diese Weise die luftblasenfreie Füllung des Trübungsmessgerätes 14 mit der Kalibriersuspension 18 ermöglicht.

Nach Beendigung der Messung der Kalibriersuspension 18 wird die leere, mit dem Gerät verbundene Kalibriersuspensionseinheit 10 mit der Öffnung 20 auf eine kleinere geodätische Höhe als der Durchflussmesskörper 30 gebracht. Dadurch fließt die Kalibriersuspension 18 in den Behälter 16 zurück. Wird die Öffnung 20 des Behälters 16 hierbei nach unten gehalten, kann keine Luft in den Behälter 16 zurückfließen. Nachdem die gesamte Kalibriersuspension 18 zurückgeflossen ist, wird die Schlauchleitung 24 wieder verschlossen und vom Trübungsmessgerät 14 getrennt.

Bei Bedarf kann die Kalibriersuspensionseinheit 10 auf diese Weise mehrfach verwendet werden. Falls keine Wiederverwendung stattfindet, kann die Kalibriersuspensionseinheit 10 wahlweise zusammen mit dem Schlauchleitungssystem 12 fachgerecht entsorgt werden.

Durch die Bereitstellung der Kalibriersuspension 18 in der erfindungsgemäßen Kalibriersuspensionseinheit 10 hat der Anwender eine erhebliche Zeitersparnis und kann eine fehlerfreie Messung durchführen. Gleichzeitig ist ein sicherer Umgang mit der Kalibriersuspension 18 gewährleistet, da weder der Anwender noch die Umwelt mit der Kalibriersuspension 18 in direkten Kontakt kommt.

Zur Herstellung der erfindungsgemäßen Kalibriersuspensionseinheit 10 ist ein Verfahren mit den folgenden Schritten vorgesehen:
In einem ersten Schritt wird der Behälter 16 mit der Kalibriersuspension 18 gefüllt. Das Volumen der Kalibriersuspension 18, das in den Behälter 16 gefüllt wird, ist vorzugsweise geringfügig größer als das Volumen der Kalibriersuspension 18, das in der fertigen Kalibriersuspensionseinheit 10 vorhanden sein soll.

In einem zweiten Schritt wird die im Behälter 16 über der Kalibriersuspension vorhandene Luft vollständig entfernt. Das Entfernen der Luft aus dem Behälter 16 kann durch mechanisches Komprimieren des flexiblen Behälters 16 erfolgen.

In einem dritten Schritt wird der Behälter 16 ohne Luftüberstand verschlossen. Hierzu wird vorzugsweise ein Septumdeckel 22 verwendet, oder es wird eine direkt an den flexiblen Behälter 16 angeschlossene Schlauchleitung in einem mit Kalibriersuspension 18 gefüllten Abschnitt abgeklemmt.

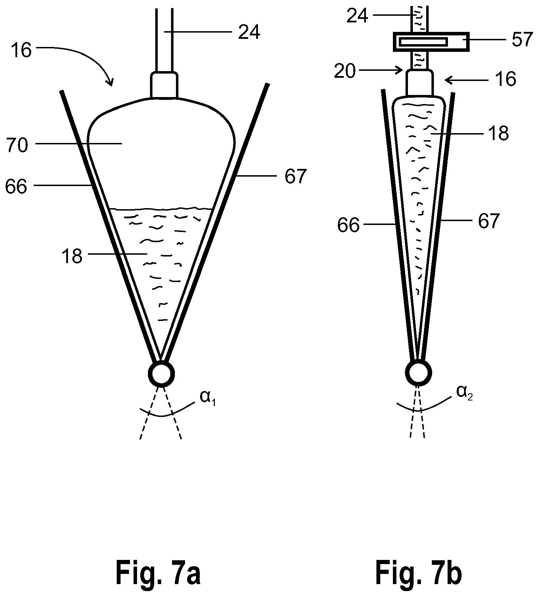

In den Figuren 7a und 7b ist ein Verfahren zum Füllen des Behälters 16 mit der Kalibriersuspension 18 und zum Entfernen von Luft aus dem Behälter 16 gezeigt. Der Behälter 16 wird zwischen zwei Platten 66, 67 positioniert, die V-förmig angeordnet sind (siehe Figur 7a), und kann zu diesem Zeitpunkt bereits teilweise durch die beiden Platten 66, 67 komprimiert werden. Das von den Platten 66, 67 eingeschlossene Volumen ist kleiner als das maximale Volumen des Behälters 16. Anschließend wird der Behälter 16 mit der Kalibriersuspension 18 gefüllt (siehe Figur 7b). Beim Füllen kann sich der Behälter 16 nur bis zu den Platten 66, 67 ausdehnen. Bevorzugt wird der Behälter 16 soweit gefüllt, dass die Kalibriersuspension 18 beim Erreichen des gewünschten Füllvolumens an der Öffnung 20 des Behälters 16 überläuft und in die direkt an den flexiblen Behälter 16 angeschlossene Schlauchleitung 24 gepresst wird. Die Schlauchleitung 24 kann dann mittels einer Klemme 57 in einem mit Kalibriersuspension 18 gefüllten Abschnitt abgeklemmt und die Kalibriersuspensionseinheit 10 auf diese Weise luftblasenfrei verschlossen werden.

Das gewünschte Füllvolumen der Kalibriersuspension 18 kann durch den Winkel α₁, α₂ der beiden Platten 66, 67 zueinander festgelegt werden. Die Platten 66, 67 können auch beweglich zueinander angebracht werden, sodass der Behälter 16 gefüllt werden und die Kalibriersuspension 18 durch eine Bewegung der Platten 66, 67 zueinander zum Überlaufen gebracht werden kann. Auf diese Weise wird die gesamte Luft 70 aus dem Behälter 16 verdrängt und der Behälter 16 kann anschließend unter Verwendung eines Septumdeckels 22 oder Abklemmen der Schlauchleitung 24 in einem mit Kalibriersuspension 18 gefüllten Abschnitt mittels der Klemme 57 ohne Luftüberstand verschlossen werden.

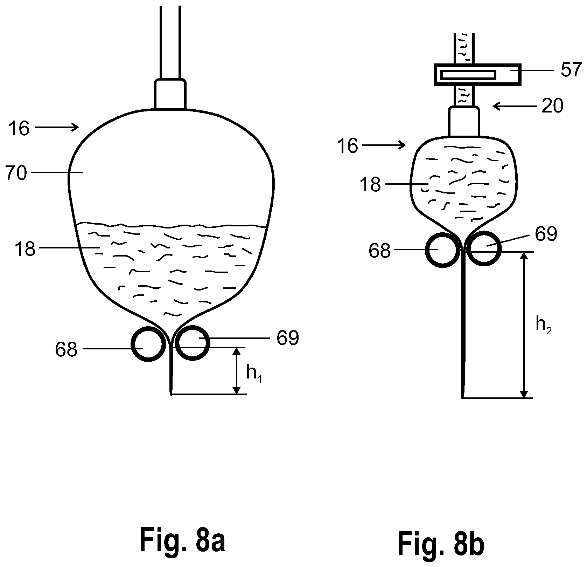

In den Figuren 8a und 8b ist ein weiteres Verfahren zum Füllen des Behälters 16 mit der Kalibriersuspension 18 und zum Entfernen von Luft 70 aus dem Behälter 16 gezeigt. Anstelle der V-förmigen Platten 66, 67 wird der Behälter 16 bis zu einer bestimmten Höhe h₁, h₂, beispielsweise durch Rollen 68, 69, komprimiert und dort abgeklemmt (siehe Figur 8a). Nun wird nur der über den Rollen 68, 69 liegende, nicht komprimierte Teil mit der Kalibriersuspension 18 gefüllt. Beim Füllen kann sich der Behälter 16 nur bis zu den Rollen 68, 69 ausdehnen, wodurch der Behälter 16 beim Erreichen des gewünschten Füllvolumens der Kalibriersuspension 18 an seiner Öffnung 20 überläuft. Das gewünschte Füllvolumen der Kalibriersuspension 18 kann durch die Höhe h₁, h₂ des durch die Rollen 68, 69 komprimierten Bereichs festgelegt werden. Alternativ zum Füllen bis zum Überlauf kann der teilweise gefüllte Behälter 16 mittels der Rollen 68, 69 weiter komprimiert und so das Füllvolumen des Behälters 16 bis zum Überlauf verkleinert werden. Auf diese Weise wird die gesamte Luft 70 aus dem Behälter 16 verdrängt und der Behälter 16 kann anschließend unter Verwendung eines Septumdeckels 22 oder Abklemmen der Schlauchleitung 24 mittels der Klemme 57 ohne Luftüberstand verschlossen werden.

Für das luftfreie Verschließen des Behälters 16 kann der in Figur 3 gezeigte Septumdeckel 22 verwendet werden. Beim Aufsetzen auf den randvoll gefüllten Behälter 16 und beim anschließenden Zuschrauben verdrängt der Fortsatz 44 die Kalibriersuspension 18 sowie eventuell noch vorhandene Luft 70 aus dem Bereich der Öffnung 20. Hierdurch wird der Behälter 16 luftblasenfrei verschlossen, d.h. ohne dass Luft 70 in den Behälter 16 eingeschlossen ist.

Ist die Schlauchleitung 24 direkt an den flexiblen Behälter 16 angeschlossen, wird der Behälter 16 so weit komprimiert, bis keine Luft 70 mehr im Behälter 16 sowie einem Teil der Schlauchleitung 24 vorhanden ist. Danach wird die Schlauchleitung 24 an einer mit Kalibriersuspension 18 gefüllten Stelle, vorzugsweise nahe dem Behälter 16, mit einer Klemme 57 abgeklemmt, sodass keine Luft 70 im Behälter 16 sowie dem entsprechend abgeklemmten Teil der Schlauchleitung 24 eingeschlossen ist.

Die auf diese Weise hergestellte Kalibriersuspensionseinheit 10 kann dann, wie oben beschrieben, zur Kalibrierung eines Trübungsmessgerätes 14 verwendet werden.

## Patentansprüche

1. Kalibriersuspensionseinheit (10) mit einem Behälter (16), der mit einer Kalibriersuspension (18) zur Kalibrierung eines Trübungsmessgerätes (14) gefüllt ist, wobei die Kalibriersuspension eine Suspension von Formazin, Styrol-Divinylbenzol, Latex oder Metalloxidgel in einer Flüssigkeit ist, wobei der Behälter (16) aus einem flexiblen Material gebildet und verschlossen ist, und wobei im verschlossenen Behälter über der Kalibriersuspension kein Luftüberstand vorhanden ist.

2. Kalibriersuspensionseinheit nach Anspruch 1, **dadurch gekennzeichnet, dass** der Behälter (16) als Folienbeutel, bevorzugt als Schlauchbeutel ausgebildet ist.

3. Kalibriersuspensionseinheit nach einem der vorhergehenden Ansprüche, **dadurch gekennzeichnet, dass** der Behälter (16) eine Wandstärke von weniger als 1 mm, bevorzugt von 0,1 mm bis 0,8 mm aufweist.

4. Kalibriersuspensionseinheit nach einem der vorhergehenden Ansprüche, **dadurch gekennzeichnet, dass** der Behälter (16) luftdicht sowie flüssigkeitsundurchlässig ist.

5. Kalibriersuspensionseinheit nach einem der vorhergehenden Ansprüche, **dadurch gekennzeichnet, dass** der Behälter (16) lichtundurchlässig ist, bevorzugt undurchlässig für UV-Licht und/oder sichtbares Licht.

6. Kalibriersuspensionseinheit nach einem der vorhergehenden Ansprüche, **dadurch gekennzeichnet, dass** der Behälter (16) aus wenigstens einer Kunststofffolie und/oder Metallfolie gebildet ist.

7. Kalibriersuspensionseinheit nach einem der vorhergehenden Ansprüche, **dadurch gekennzeichnet, dass** das maximale Volumen des Behälters (16) größer ist als das Volumen der Kalibriersuspension (18), vorzugsweise dass das Verhältnis von dem Volumen der Kalibriersuspension (18) zum maximalen Volumen des Behälters (16) zwischen 0,2 und 0,8, bevorzugt zwischen 0,4 und 0,6 beträgt.

8. Kalibriersuspensionseinheit nach einem der vorhergehenden Ansprüche, **dadurch gekennzeichnet, dass** die Kalibriersuspensionseinheit (10) ein Schlauchleitungssystem (12) mit einer direkt an den flexiblen Behälter (16) angeschlossenen Schlauchleitung (24) umfasst, bevorzugt mit einer fest mit dem flexiblen Behälter (16) verbundenen oder an dem flexiblen Behälter (16) lösbar, insbesondere mittels eines Deckels, befestigten Schlauchleitung (24).

9. Kalibriersuspensionseinheit nach einem der Ansprüche 1 bis 7, **dadurch gekennzeichnet, dass** die Kalibriersuspensionseinheit (10) ein Schlauchleitungssystem (12) mit einer Schlauchleitung (24) und einer an der Schlauchleitung (24) vorgesehene Kanüle (26) umfasst.

10. Kalibriersuspensionseinheit nach Anspruch 9, **dadurch gekennzeichnet, dass** der Behälter (16) durch einen Septumdeckel (22), insbesondere einem Septumdeckel (22) aus Kunststoff, verschlossen ist.

11. Kalibriersuspensionseinheit nach einem der Ansprüche 8 bis 10, **dadurch gekennzeichnet, dass** die Schlauchleitung (24) einen Innendurchmesser d₂ und wahlweise die Kanüle (26) einen Innendurchmesser d₁ von jeweils höchstens 9 mm, vorzugsweise 3 bis 7 mm, aufweisen.

12. Verfahren zur Herstellung einer Kalibriersuspensionseinheit (10) nach einem der vorhergehenden Ansprüche zur Kalibrierung eines Trübungsmessgerätes (14), mit den folgenden Schritten:
a) Füllen des Behälters (16) mit der Kalibriersuspension (18),
b) im Wesentlichen vollständige Entfernung der Luft (70) aus dem Behälter (16), und
c) Verschließen des Behälters (16),
**dadurch gekennzeichnet, dass** über der Kalibriersuspension (18) im verschlossenen Behälter (16) kein Luftüberstand vorhanden ist.

13. Verfahren zur Herstellung einer Kalibriersuspensionseinheit (10) nach Anspruch 12, **dadurch gekennzeichnet, dass** das Entfernen der Luft (70) durch mechanisches Komprimieren des Behälters (16) erfolgt.

14. Verwendung einer Kalibriersuspensionseinheit (10) nach einem der Ansprüche 1 bis 11 zur Kalibrierung eines Trübungsmessgerätes (14), vorzugsweise dass die Kalibriersuspension (18) im Wesentlichen luftblasenfrei in das Trübungsmessgerät (14) eingebracht wird.

15. Verwendung nach Anspruch 14, wobei ein Durchmischen der Kalibriersuspension (18) durch mechanisches Verformen der Kalibriersuspensionseinheit (10) erfolgt.

16. Verwendung nach einem der Ansprüche 14 oder 15, **dadurch gekennzeichnet, dass** die Kalibriersuspension (18) mittels einer Schlauchleitung (24) in das Trübungsmessgerät (14) eingebracht wird, vorzugsweise, dass sich der flexible Behälter (16) beim Entweichen der Kalibriersuspension (18) zusammenzieht, ohne dass Luft (70) als Volumenausgleich durch die Kalibriersuspension (18) angesaugt wird, wobei die Luft (70) in der Schlauchleitung (24) durch die Kalibriersuspension (18) als Ganzes verdrängt wird, ohne dass sich Luftblasen in der Kalibriersuspension (18) bilden.

## Claims

1. A calibration suspension unit (10) comprising a container (16) that is filled with a calibration suspension (18) for the calibration of a turbidity meter (14), the calibration suspension being a suspension of formazine, styrene divinyl benzene, latex or metal oxide gel in a liquid, wherein the container (16) is made from a flexible material and is closed, and wherein there is no air supernatant above the calibration suspension in the closed container.

2. The calibration suspension unit according to claim 1, **characterized in that** the container (16) is designed as a foil bag, preferably as a tubular bag.

3. The calibration suspension unit according to either of the preceding claims, **characterized in that** the container (16) has a wall thickness of less than 1 mm, preferably of 0.1 mm to 0.8 mm.

4. The calibration suspension unit according to any of the preceding claims, **characterized in that** the container (16) is air-tight and impermeable to liquids.

5. The calibration suspension unit according to any of the preceding claims, **characterized in that** the container (16) is impermeable to light, preferably impermeable to UV light and/or visible light.

6. The calibration suspension unit according to any of the preceding claims, **characterized in that** the container (16) is made of at least one plastic film and/or metal foil.

7. The calibration suspension unit according to any of the preceding claims, **characterized in that** the maximum volume of the container (16) is larger than the volume of the calibration suspension (18), preferably **in that** the ratio of the volume of the calibration suspension (18) to the maximum volume of the container (16) is between 0.2 and 0.8, preferably between 0.4 and 0.6.

8. The calibration suspension unit according to any of the preceding claims, **characterized in that** the calibration suspension unit (10) comprises a hose line system (12) having a hose line (24) directly connected to the flexible container (16), preferably having a hose line (24) firmly coupled to the flexible container (16) or detachably fastened to the flexible container (16), in particular by means of a lid.

9. The calibration suspension unit according to any of claims 1 to 7, **characterized in that** the calibration suspension unit (10) comprises a hose line system (12) having a hose line (24) and a cannula (26) provided at the hose line (24).

10. The calibration suspension unit according to claim 9, **characterized in that** the container (16) is closed by a septum lid (22), in particular a septum lid (22) made of plastic.

11. The calibration suspension unit according to any of claims 8 to 10, **characterized in that** the hose line (24) has an internal diameter d₂ and, optionally, the cannula (26) has an internal diameter d₁ of 9 mm at the most each, preferably from 3 to 7 mm.

12. A method of manufacturing a calibration suspension unit (10) according to any of the preceding claims for the calibration of a turbidity meter (14), comprising the steps of:
a) filling the container (16) with the calibration suspension (18);
b) removing substantially all air (70) from the container (16); and
c) closing the container (16),
**characterized in that** there is no air supernatant above the calibration suspension (18) in the closed container (16).

13. The method of manufacturing a calibration suspension unit (10) according to claim 12, **characterized in that** the air (70) is removed by mechanical compression of the container (16).

14. Use of a calibration suspension unit (10) according to any of claims 1 to 11 for the calibration of a turbidity meter (14), preferably in that the calibration suspension (18) is introduced into the turbidity meter (14) substantially free of air bubbles.

15. Use according to claim 14, wherein a mixing of the calibration suspension (18) is effected by mechanical deformation of the calibration suspension unit (10).

16. Use according to either of claims 14 or 15, **characterized in that** the calibration suspension (18) is introduced into the turbidity meter (14) by means of a hose line (24), preferably **in that** the flexible container (16) contracts as the calibration suspension (18) escapes, without air (70) being sucked in as a volume compensation by the calibration suspension (18), wherein the air (70) in the hose line (24) is displaced as a whole by the calibration suspension (18) without any air bubbles forming in the calibration suspension (18).

## Revendications

1. Unité de suspension d'étalonnage (10), comprenant un récipient (16) qui est rempli d'une suspension d'étalonnage (18) pour étalonner un turbidimètre (14), la suspension d'étalonnage étant une suspension de formazine, de styrène-divinylbenzène, de latex ou de gel d'oxyde métallique dans un liquide, le récipient (16) étant réalisé en un matériau flexible et étant fermé, et aucun air surnageant au-dessus de la suspension d'étalonnage étant présent dans le récipient fermé.

2. Unité de suspension d'étalonnage selon la revendication 1, **caractérisée en ce que** le récipient (16) est réalisé sous forme de sachet en feuille, de préférence sous forme de sachet tubulaire.

3. Unité de suspension d'étalonnage selon l'une des revendications précédentes, **caractérisée en ce que** le récipient (16) présente une épaisseur de paroi inférieure à 1 mm, de préférence de 0,1 mm à 0,8 mm.

4. Unité de suspension d'étalonnage selon l'une des revendications précédentes, **caractérisée en ce que** le récipient (16) est étanche à l'air et imperméable aux liquides.

5. Unité de suspension d'étalonnage selon l'une des revendications précédentes, **caractérisée en ce que** le récipient (16) est imperméable à la lumière, de préférence imperméable à la lumière UV et/ou à la lumière visible.

6. Unité de suspension d'étalonnage selon l'une des revendications précédentes, **caractérisée en ce que** le récipient (16) est réalisé en au moins un film plastique et/ou une feuille métallique.

7. Unité de suspension d'étalonnage selon l'une des revendications précédentes, **caractérisée en ce que** le volume maximal du récipient (16) est supérieur au volume de la suspension d'étalonnage (18), de préférence **en ce que** le rapport entre le volume de la suspension d'étalonnage (18) et le volume maximal du récipient (16) est compris entre 0,2 et 0,8, de préférence entre 0,4 et 0,6.

8. Unité de suspension d'étalonnage selon l'une des revendications précédentes, **caractérisée en ce que** l'unité de suspension d'étalonnage (10) présente un système de tuyaux souples (12) comprenant un tuyau souple (24) directement relié au récipient flexible (16), comprenant de préférence un tuyau souple (24) qui est relié de manière solidaire au récipient flexible (16) ou fixé de manière amovible au récipient flexible (16), en particulier au moyen d'un couvercle.

9. Unité de suspension d'étalonnage selon l'une des revendications 1 à 7, **caractérisée en ce que** l'unité de suspension d'étalonnage (10) présente un système de tuyaux souples (12) comprenant un tuyau souple (24) et une canule (26) prévue sur le tuyau souple (24).

10. Unité de suspension d'étalonnage selon la revendication 9, **caractérisée en ce que** le récipient (16) est fermé par un couvercle à septum (22), en particulier un couvercle à septum (22) en plastique.

11. Unité de suspension d'étalonnage selon l'une des revendications 8 à 10, **caractérisée en ce que** le tuyau souple (24) présente un diamètre intérieur d₂ et **en ce que**, de manière sélective, la canule (26) présente un diamètre intérieur d₁ de 9 mm au maximum, de préférence de 3 à 7 mm.

12. Procédé de fabrication d'une unité de suspension d'étalonnage (10) selon l'une des revendications précédentes pour l'étalonnage d'un turbidimètre (14), comprenant les étapes suivantes :
a) le remplissage du récipient (16) de la suspension d'étalonnage (18),
b) l'élimination sensiblement complète de l'air (70) du récipient (16) ; et
c) la fermeture du récipient (16),
**caractérisé en ce qu'**il n'y a pas d'air surnageant au-dessus de la suspension d'étalonnage (18) dans le récipient fermé (16).

13. Procédé de fabrication d'une unité de suspension d'étalonnage (10) selon la revendication 12, **caractérisé en ce que** l'élimination de l'air (70) est réalisée par compression mécanique du récipient (16).

14. Utilisation d'une unité de suspension d'étalonnage (10) selon l'une des revendications 1 à 11 pour l'étalonnage d'un turbidimètre (14), de préférence en ce que la suspension d'étalonnage (18) est introduite dans le turbidimètre (14) sensiblement sans bulles d'air.

15. Utilisation selon la revendication 14, un mélange de la suspension d'étalonnage (18) étant réalisé par déformation mécanique de l'unité de suspension d'étalonnage (10).

16. Utilisation selon l'une des revendications 14 ou 15, **caractérisée en ce que** la suspension d'étalonnage (18) est introduite dans le turbidimètre (14) au moyen d'un tuyau souple (24), de préférence **en ce que** le récipient flexible (16) se contracte lorsque la suspension d'étalonnage (18) s'échappe sans que de l'air (70) soit aspiré à travers la suspension d'étalonnage (18) pour compenser le volume, l'air (70) dans le tuyau souple (24) étant déplacé dans son ensemble par la suspension d'étalonnage (18) sans formation de bulles d'air dans la suspension d'étalonnage (18).
